# EUROPEAN PATENT APPLICATION

(11) **EP 2 369 586 A1**
(43) Date of publication of application: **28.09.2011**
(21) Application number: 09834361.9
(22) Date of filing: 16.12.2009
(51) Int. Cl.: G11B 20/12, G11B 7/007, G11B 20/10

(54) **INFORMATION RECORDING MEDIUM, INFORMATION RECORDING DEVICE, INFORMATION RECORDING METHOD, INFORMATION REPRODUCING DEVICE, AND INFORMATION REPRODUCING METHOD**

(30) Priority: 22.12.2008 JP 2008326022
(71) Applicant: Panasonic Corporation, Kadoma-shi Osaka 571-8501 (JP)
(72) Inventor: YOSHIKAZU, Yamamoto, Osaka 540-6207 (JP); MATOSHI, Ito, Osaka 540-6207 (JP)
(74) Representative: Grünecker, Kinkeldey, Stockmair & Schwanhäusser Anwaltssozietät
(86) International application number: PCT/JP2009/006939
(87) International publication number: WO 2010/073549

(57) **Abstract**

According to the present invention, the size of defect management information is reduced by using a top spare area **102** and middle spare areas **103** in the ascending order of their physical block addresses and spare areas can be expanded more easily by using only the last spare area **104** in the descending order of its physical block addresses.

## Description

### TECHNICAL FIELD

The present invention relates to an information recording medium and an apparatus and method for writing information, which will contribute to increasing the reliability of data writing by performing a replacement write operation between a defective block and a spare area. The present invention also relates to an apparatus and method for reading information (or data) from such an information recording medium.

### BACKGROUND ART

Recently, various rewritable or write-once optical discs with huge storage capacities such as BD-RE (Blu-ray Disc Rewritable) and BD-R (Blu-ray Disc Recordable) have become increasingly popular year after year. In those optical discs, people try to ensure good reliability of data writing by assigning a spare area and writing data that should have been written on a defective block on a replacement block in a spare area instead.

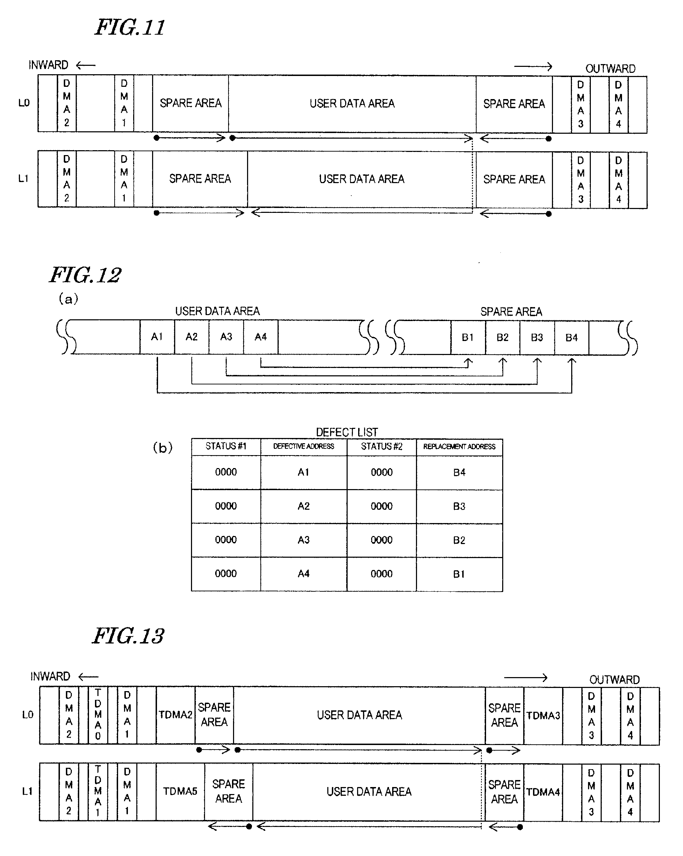

FIG. **11** illustrates the logical architecture of areas for use to make defect management on a dual-layer BD-RE. To this BD-RE, assigned are a user data area on which user data is going to be written and spare areas that provide a replacement block for any defective block in the user data area. The correspondence between the original blocks to be replaced in the user data area and the replacement blocks in the spare areas when the replacement write operation is carried out is stored as defect management information in defect management areas **DMA.**

A dual-layer BD-RE adopts an opposite track path structure, in which the physical block addresses assigned to the L0 layer go up outward (i.e., from the inner edge of the disc toward its outer edge) and in which the physical addresses assigned to the L1 layer go up inward (i.e., from the outer edge of the disc toward its inner edge).

The spare areas located closer to the inner edge of the disc are used outward (i.e., from their innermost end), while the spare areas located closer to the outer edge are used inward (i.e., from their outermost end). That is to say, the inner spare area on the L0 layer and the outer spare area on the L1 layer are used in the ascending order of their physical block addresses, while the outer spare area on the L0 layer and the inner spare area on the L1 layer are used in the descending order of their physical block addresses. As used herein, the "ascending order" refers to the order that advances in the direction in which the physical block addresses increase, while the "descending order" refers to the order that advances in the direction in which the physical block addresses decrease.

The inner and outer spare areas in each layer are used in mutually opposite directions in this manner in order to facilitate expansion of the spare areas (see Patent Document No. 1, for example).

FIG. **12 (a)** shows how data that should have been written on four contiguous blocks **A1** to **A4** in the user data area is written on replacement blocks **B1** to **B4** in the spare area, while FIG. **12(b)** shows the entries of a defect list representing defect management information such a situation.

An entry, of which Statuses #1 and #2 are both "0000", is called "RAD (Re-allocated Defect)", which indicates that data that should have been written on a block identified by a defective address has been written on a block identified by a replacement address. In a BD-RE, there are spare areas to be used in the descending order of their physical block addresses. That is why even if the blocks to be replaced are contiguous with each other in the ascending order, the replacement blocks are not necessarily contiguous in the ascending order of their physical block addresses.

FIG. **13** illustrates the logical architecture of areas for use to make defect management on a dual-layer BD-R. To this BD-R, assigned are a user data area on which user data is going to be written and spare areas in which data that should have been written on a defective block in the user data area is written on replacement blocks. The correspondence between the original block to be replaced in the user data area and the replacement blocks in the spare areas when the replacement write operation is carried out is stored as defect management information in temporary defect management areas **TDMA** until the disc is finalized. And once the disc gets finalized, the defect management information is stored in the DMA.

Just like the dual-layer BD-RE, a dual-layer BD-R also adopts an opposite track path structure, in which the physical block addresses assigned to the L0 layer go up outward (i.e., from the inner edge of the disc toward its outer edge) and in which the physical addresses assigned to the L1 layer go up inward (i.e., from the outer edge of the disc toward its inner edge).

However, the spare areas on the L0 layer are both used outward from their innermost end, while the spare areas on the L1 layer are both used inward from their outermost end. That is to say, in this case, every spare area is used in the ascending order of their physical block addresses.

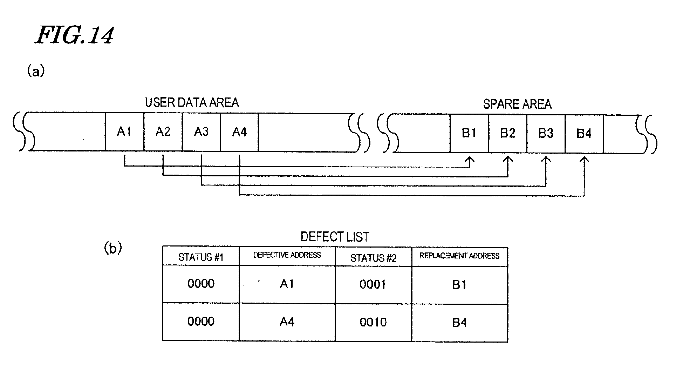

FIG. **14 (a)** shows how data that should have been written on four contiguous blocks **A1** to **A4** in the user data area is written on replacement blocks **B1** to **B4** in the spare area, and FIG. **14(b)** shows the entries of a defect list representing defect management information in such a situation. An entry, of which Status #1 is "0000" and Status #2 is "0001" or "0010", is called "CRD (Contiguous Re-allocated Defect)". If Status #2 is "0001", CRD represents replacement information of a start block in a situation where multiple contiguous blocks have been replaced. On the other hand, if Status #2 is "0010", CRD represents replacement information of an end block in a situation where multiple contiguous blocks have been replaced.

As can be seen, in a BD-R, if blocks to be replaced and blocks to replace are both contiguous, the size of the defect list can be reduced by using the CRD entries.

### CITATION LIST

### PATENT LITERATURE

Patent Document No. 1: Japanese Patent Publication No. 3090316

### SUMMARY OF INVENTION

### TECHNICAL PROBLEM

These days, as the storage density and the number of recording layers of an optical disc have been further increased, the overall storage capacity has become even larger. On top of that, the size of a spare area also tends to rise proportionally to such a tremendous increase in storage capacity.

Generally speaking, if the size of a spare area increases, the size of a defect list representing defect management information will also increase. However, to read or write from/to an optical disc, the defect management information should be stored in a buffer memory of an apparatus for reading or writing from/to the optical disc. That is why the larger the size of the defect list, the narrower the space left in the buffer memory.

To reduce the size of a defect list, the CRD entries on a BD-R may be used in a situation where blocks to be replaced and blocks to replace are both contiguous ones. However, if the order in which the spare areas are used on a BD-RE is adopted, as many as 50% of the spare areas will have to be used in the descending order of their physical block addresses. In that case, in such a spare area to be used in the descending order of physical block addresses, even if the blocks to be replaced are contiguous with each other in the ascending order, the blocks to replace are not always contiguous in the ascending order of their physical block addresses and the CRD entries sometimes cannot be used.

Meanwhile, if the order in which the spare areas are used on a BD-R is adopted, then every spare area will be used in the ascending order of their physical block addresses and there will be more chances the CRD entries can be used. In that case, however, it will be difficult to expand the spare areas.

It is therefore an object of the present invention to provide an information recording medium and an apparatus and method for writing information that can not only reduce the size of the defect management information but also expand the spare area easily. Another object of the present invention is to provide an apparatus and method for reading information from such an information recording medium.

### SOLUTION TO PROBLEM

A multilayer information recording medium according to the present invention has multiple recording layers, and includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The n^{th} spare area, to which a larger physical block address is assigned than any other one of the spare areas, is used in the descending order of its physical block addresses. On the other hand, the first through (n-1)^{th} spare areas, other than the n^{th} spare area, are used in the ascending order of their physical block addresses.

In one preferred embodiment, the multilayer information recording medium further includes a defect management area, in which stored is information indicating the physical block address of a block to be used next for each of the spare areas.

In another preferred embodiment, the multilayer information recording medium further includes a defect management area in which a defect list is stored. The defect list includes a contiguous replacement entry, which indicates that a replacement write operation is performed between a series of defective blocks in the user data area and a series of blocks in the spare areas.

An information writing apparatus according to the present invention is an apparatus for writing information on a multilayer information recording medium with multiple recording layers. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. If a replacement block for the defective block in the user data area needs to be found in the n^{th} spare area, to which a larger physical block address is assigned than any other one of the spare areas, the apparatus uses one of unused blocks of the n^{th} spare area that has the largest physical block address. But if a replacement block for the defective block in the user data area needs to be found in an i^{h} spare area (where 1≦i< n), other than the n^{th} spare area, the apparatus uses one of unused blocks of the i^{th} spare area that has the smallest physical block address.

An information writing method according to the present invention is a method for writing information on a multilayer information recording medium with multiple recording layers. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The information writing method includes the steps of: (a) choosing one of the spare areas to provide a replacement block for the defective block in the user data area; if the spare area chosen in the step (a) is the n^{th} spare area, to which the largest physical block address is assigned of all the spare areas, (b) selecting one of unused blocks of the n^{th} spare area that has the largest physical block address; but if the spare area chosen in the step (a) is an i^{h} spare area (where 1≦i<n), other than the n^{th} spare area, (c) selecting one of unused blocks of the i^{th} spare area that has the smallest physical block address; and (d) writing data on the replacement block that has been selected in the step (b) or (c).

An information reading apparatus according to the present invention is an apparatus for reading information from a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area to store defect management information. Physical block addresses are assigned to respective blocks that are read/write units for the multilayer information recording medium. The n^{th} spare area, to which a larger physical block address is assigned than any other one of the spare areas, is used in the descending order of its physical block addresses. On the other hand, the first through (n-1)^{th} spare areas, other than the n^{th} spare area, are used in the ascending order of their physical block addresses. The information reading apparatus retrieves the defect management information from the defect management area, and reads information from a replacement block, which is designated by the defect management information, instead of a defective block that is also designated by the defect management information.

Another information writing apparatus according to the present invention is an apparatus for writing information on a multilayer information recording medium with multiple recording layers. The multilayer information recording medium includes: a user data area on which user data is going to be written; first through n^{th} spare areas (where n is an integer that is equal to or greater than four) for providing a replacement block for a defective block, if any, in the user data area; and a defect management area. Physical block addresses are assigned to respective blocks that are read/write units for the multilayer information recording medium. In the defect management area, stored is information indicating the physical block address of a block to be used next for each of the spare areas. If a replacement block for a defective block in the user data area needs to be found in the n^{th} spare area, to which a larger physical block address is assigned than any other one of the spare areas, the information writing apparatus writes data on the next block to use for the n^{th} spare area and updates the information indicating the physical block address of the next block to use for the n^{th} spare area into a value decreased by the number of the replacement blocks used. But if a replacement block for a defective block in the user data area needs to be found in an i^{th} spare area (where 1≦i<n), other than the n^{th} spare area, the information writing apparatus writes data on the next block to use for the i^{th} spare area and updates the information indicating the physical block address of the next block to use for the i^{th} spare area into a value increased by the number of the replacement blocks used.

Another information writing method according to the present invention is a method for writing information on a multilayer information recording medium with multiple recording layers. The multilayer information recording medium includes: a user data area on which user data is going to be written; first through n^{th} spare areas (where n is an integer that is equal to or greater than four) for providing a replacement block for a defective block, if any, in the user data area; and a defect management area. Physical block addresses are assigned to respective blocks that are read/write units for the multilayer information recording medium. In the defect management area, stored is information indicating the physical block address of a block to be used next for each of the spare areas. The information writing method includes the steps of: (a) retrieving information indicating the physical block address of a block to be used next from the defect management area; (b) choosing one of the spare areas to provide a replacement block for the defective block in the user data area; (c) writing data on the next block to use for the spare area that has been chosen in the step (b); if the spare area chosen in the step (b) is the n^{th} spare area, to which a larger physical block address is assigned than any other one of the spare areas, (d) updating the information indicating the physical block address of the next block to use for the n^{th} spare area into a value decreased by the number of the replacement blocks used; but if the spare area chosen in the step (b) is an i^{th} spare area (where 1≦i<n), other than the n^{th} spare area, (e) updating the information indicating the physical block address of the next block to use for the i^{th} spare area into a value increased by the number of the replacement blocks used; and (f) writing the information indicating the physical block address of the next block to use that has been updated in the step (d) or (e) in the defect management area.

Another multilayer information recording medium according to the present invention has multiple recording layers on which information is written by the information writing apparatus of the present invention. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The multilayer information recording medium further includes a defect management area to store information indicating the physical block address of a block to be used next for each of the spare areas.

Another information reading apparatus according to the present invention is an apparatus for reading information from the multilayer information recording medium of the present invention described above. The information reading apparatus retrieves defect management information from the defect management area, and reads information from a replacement block, which is designated by the defect management information, instead of a defective block that is also designated by the defect management information.

Another multilayer information recording medium according to the present invention has multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The DDS area stores pointer information that points to an effective one of the DFL areas. The effective DFL area stores information indicating the physical block address of a block to be used next for each of the spare areas.

Still another information writing apparatus according to the present invention is an apparatus for writing information on a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The information writing apparatus writes pointer information that points to an effective one of the DFL areas on the DDS area, and also writes information indicating the physical block address of a block to be used next for each of the spare areas on the effective DFL area.

Still another information writing method according to the present invention is a method for writing information on a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The information writing method includes the steps of: writing pointer information that points to an effective one of the DFL areas on the DDS area; and writing information indicating the physical block address of a block to be used next for each of the spare areas on the effective DFL area.

Still another information reading apparatus according to the present invention is an apparatus for reading information from a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The DDS area stores pointer information that points to an effective one of the DFL areas. The effective DFL area stores information indicating the physical block address of a block to be used next for each of the spare areas. The information reading apparatus retrieves the pointer information from the DDS area, and also retrieves the information indicating the physical block address of the next block to use from the effective DFL area pointed to by the pointer information.

Yet another information writing apparatus according to the present invention is an apparatus for writing information on a multilayer information recording medium with multiple recording layers. The recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. If replacement blocks for a series of defective blocks in the user data area need to be found in the n^{th} spare area, to which a larger physical block address is assigned than any other one of the spare areas, the information writing apparatus writes data collectively on contiguous ones of unused blocks of the n^{th} spare area that have the largest physical block address. But if replacement blocks for the series of defective blocks in the user data area need to be found in an i^{th} spare area (where 1≦i<n), other than the n^{th} spare area, the information writing apparatus writes data collectively on contiguous ones of unused blocks of the i^{th} spare area that have the smallest physical block address.

In one preferred embodiment, the multilayer information recording medium further includes a defect management area, in which stored is information indicating the physical block address of a block to be used next for each of the spare areas. If replacement blocks for the series of defective blocks in the user data area need to be found in the n^{th} spare area, the information writing apparatus selects blocks that start with the next block to use for the n^{th} spare area and are contiguous with each other in the descending order of the addresses, writes data collectively, in the ascending order of the addresses, on those replacement blocks that are contiguous with each other in the descending order, and updates the information indicating the physical block address of the next block to use for the n^{th} spare area into a value decreased by the number of the replacement blocks used. But if replacement blocks for the series of defective blocks in the user data area need to be found in the i^{th} spare area, the information writing apparatus writes data collectively, in the ascending order of the addresses, on a series of replacement blocks that starts with the next block to use for the i^{th} spare area, and updates the information indicating the physical block address of the next block to use for the i^{th} spare area into a value increased by the number of the replacement blocks used.

Yet another information writing method according to the present invention is a method for writing information on a multilayer information recording medium with multiple recording layers. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The information writing method includes the steps of: (a) choosing one of the spare areas to provide replacement blocks for a series of defective blocks in the user data area; if the spare area chosen in the step (a) is the n^{th} spare area, to which a larger physical block address is assigned than any other one of the spare areas, (b) selecting contiguous ones of unused blocks of the n^{th} spare area that have the largest physical block address; but if the spare area chosen in the step (a) is an i^{th} spare area (where 1≦i<n), other than the n^{th} spare area, (c) selecting contiguous ones of unused blocks of the i^{th} spare area that have the smallest physical block address; and (d) writing data collectively on those contiguous replacement blocks that have been selected in the step (b) or (c).

In one preferred embodiment, the multilayer information recording medium further includes a defect management area, in which stored is information indicating the physical block address of a block to be used next for each of the spare areas. The information writing method further includes the step (e) of retrieving information indicating the physical block address of the next block to use from the defect management area. If the spare area chosen in the step (a) is the n^{th} spare area, the step (b) includes selecting blocks that start with the next block to use for the n^{th} spare area and that are contiguous with each other in the descending order of the addresses, and the step (d) includes writing data collectively, in the ascending order of the addresses, on those blocks that are contiguous with each other in the descending order. But if the spare area chosen in the step (a) is the i^{th} spare area, the step (d) includes writing data collectively, in the ascending order of the addresses, on those blocks that start with the next block to use for the i^{th} spare area. The information writing method further includes the steps of: if data has been written on the replacement blocks in the n^{th} spare area, (f) updating the information indicating the physical block address of the next block to use for the n^{th} spare area into a value decreased by the number of the replacement blocks used; but if data has been written on the replacement blocks in the i^{th} spare area, (g) updating the information indicating the physical block address of the next block to use for the i^{th} spare area into a value increased by the number of the replacement blocks used; and (h) writing the information indicating the physical block address of the next block to use, which has been updated in the step (f) or (g), on the defect management area.

### ADVANTAGEOUS EFFECTS OF INVENTION

According to the present invention, the top spare area and multiple middle spare areas are used in the ascending order of physical block addresses but the last spare area is used in the descending order of physical block addresses, thereby reducing the size of defect management information and expanding the spare area easily at the same time.

In addition, according to the present invention, the physical block address of a next block to use for each of multiple spare areas (which will be referred to herein as a "spare area next-block-to-use address") is written on a DFL area, not on a DDS area. That is why even if the spare area next-block-to-use address has been rewritten more than the maximum number of times of rewrite on that DFL area, that address can still be rewritten (or updated) continuously by newly using another one of the DFL areas in the same defect management area. On top of that, pointer information that points to an effective one of the multiple DFL areas is written on the DDS area. If another DFL area needs to be newly used, then that pointer information may be rewritten (or updated). As a result, the DDS area that is the only area arranged at a fixed location in the defect management area just needs to be rewritten a smaller number of times.

### BRIEF DESCRIPTION OF DRAWINGS

FIGS. **1(a)** and **1(b)** illustrate arrangements for an information recording medium as a preferred embodiment of the present invention.
FIG. **2** illustrates a defect management area on an information recording medium as a preferred embodiment of the present invention.
FIG. **3** illustrates an information writing apparatus as a preferred embodiment of the present invention.
FIGS. **4(a)** through **4(h)** illustrate how to get a replacement write operation done according to a preferred embodiment of the present invention.
FIGS. **5(a)** and **5(b)** illustrate how to get a replacement write operation done according to a preferred embodiment of the present invention.
FIG. **6** illustrates an information reading apparatus as a preferred embodiment of the present invention.
FIG. **7** is a flowchart showing how to carry out replacement write processing according to a preferred embodiment of the present invention.
FIG. **8** is a flowchart showing how to carry out the processing of retrieving defect management information according to a preferred embodiment of the present invention.
FIG. **9** is a flowchart showing how to carry out replacement write processing according to a preferred embodiment of the present invention.
FIG. **10** illustrates how to expand a spare area according to a preferred embodiment of the present invention.
FIG. **11** illustrates an arrangement for a BD-RE.
FIGS. **12(a)** and **12(b)** illustrate how to carry out a replacement write operation on a BD-RE.
FIG. **13** illustrates an arrangement for a BD-R.
FIGS. **14(a)** and **14(b)** illustrate how to carry out a replacement write operation on a BD-R.

### DESCRIPTION OF EMBODIMENTS

Hereinafter, preferred embodiments of the present invention will be described with reference to the accompanying drawings.

### (EMBODIMENT 1)

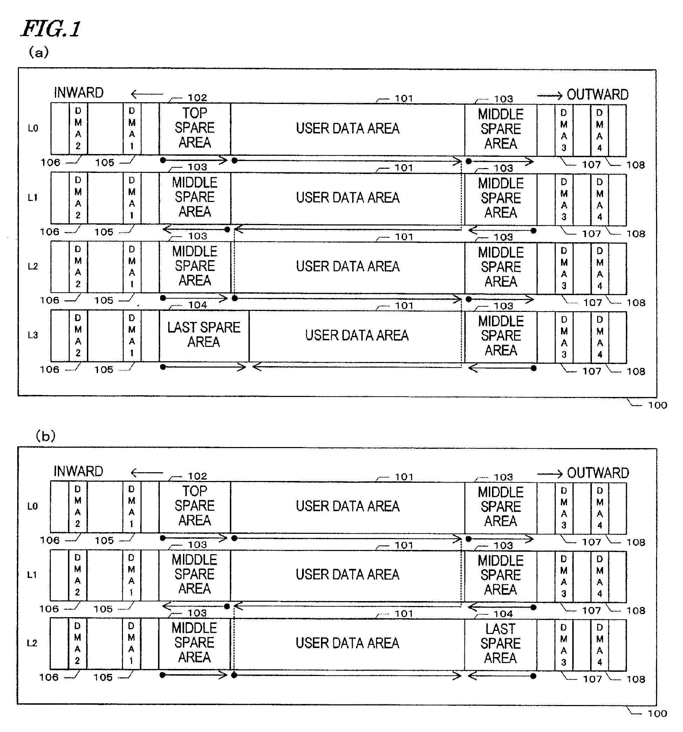

FIG. **1(a)** illustrates an information recording medium **100** as a first specific preferred embodiment of the present invention. The information recording medium **100** may be an optical disc, for example, and includes multiple recording layers **L0, L1, L2** and **L3.** Also, the information recording medium **100** has user data areas **101,** a top spare area **102,** middle spare areas **103,** and a last spare area **104.** The information recording medium **100** further has DMA (defect management areas) #1, #2, #3 and #4, which are identified by the reference numerals **105, 106, 107** and **108,** respectively.

The user data area **101** is an area on which user data is written. The spare areas **102, 103** and **104** are areas that provide a replacement for a defective block, if any, in the user data area **101** and the data that should have been written on that defective block is written there instead. The spare areas **102, 103** and **104** will also be referred to herein as "first and second through n^{th} spare areas" (where n is an integer that is equal to or greater than four). In the example illustrated in FIG. **1(a)****,** n is eight, the top spare area **102** corresponds to the first spare area, the six middle spare areas **103** correspond to the second through seventh spare areas, and the last spare area **104** corresponds to the eighth spare area. Also, the last spare area **104** is a spare area to which a larger physical block address is assigned than any other one of the multiple spare areas.

This information recording medium **100** has a sector structure and uses either one sector or several sectors as the minimum unit to perform a read/write operation on. In the following description, the minimum unit to perform a read/write operation on will be referred to herein as a "block", and addresses assigned to those blocks in the ascending order in the direction in which the read/write operation is performed will be referred to herein as "Physical block addresses".

The information recording medium 100 shown in FIG. **1(a)** adopts opposite track paths. Thus, the physical block addresses are assigned so as to increase outward (i.e., from the inner edge of the disc toward its outer edge) on L0 and L2 layers, while the physical block addresses are assigned so as to increase inward (i.e., from the outer edge of the disc toward its inner edge) on L1 and L3 layers.

A replacement block for a defective block, if any, in the user data area **101** should be found in any of the top spare area **102,** the multiple middle spare areas **103** and the last spare area **104.** Such a replacement write operation is carried out by an information writing apparatus to be described later. In performing a replacement write operation, the top spare area **102** and the middle spare areas **103** are used in the ascending order of their physical block addresses, while the last spare area **104** is used in the descending order of physical block addresses. That is to say, if a replacement block needs to be found in any of the top spare area **102** and the middle spare areas **103,** the replacement write operation should be performed on one of unused blocks in that spare area to replace that has the smallest physical block address. On the other hand, if a replacement block needs to be found in the last spare area **104,** the replacement write operation should be performed on one of unused blocks in that last spare area **104** that has the largest physical block address.

In a situation where there are both used blocks and unused blocks in the same spare area (e.g., if a used block in that spare area has been converted into an unused one), the replacement block to be provided by that spare area may be an unused block with the one more large physical block address, next to the used block with the largest physical block address, as for the top spare area **102** and the multiple middle spare areas **103.** As for the last spare area **104,** on the other hand, the replacement block to be provided by that spare area **104** may be an unused block with the one less small physical block address, next to the used block with the smallest physical block address.

Information indicating that a replacement for a defective block in the user data area **101** has been found in any of the top spare area **102,** the middle spare areas **103** and the last spare area **104** is written as a defect list on DMA #1 **105** through DMA #4 **108.**

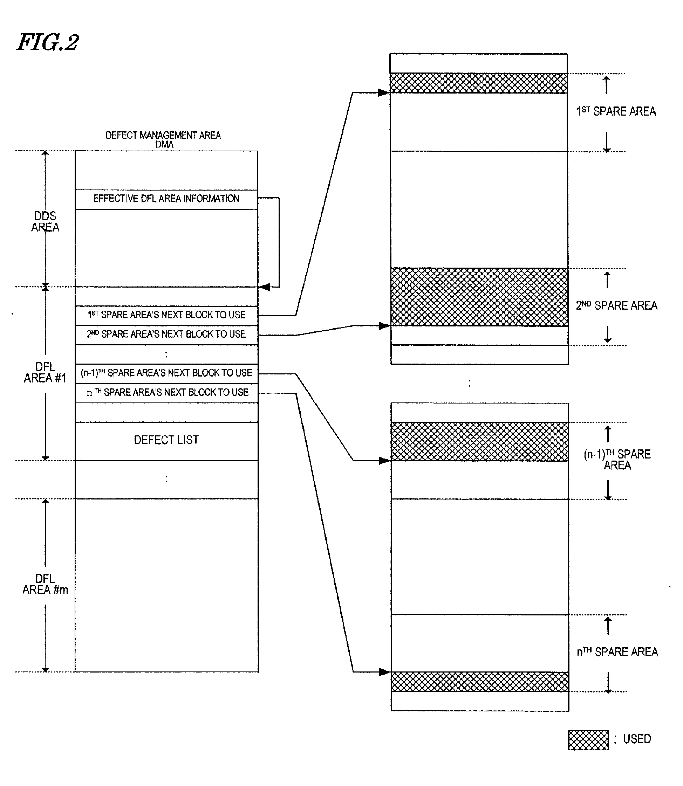

FIG. **2** illustrates an exemplary arrangement for the defect management area **DMA** in a situation where the information recording medium **100** is a rewritable one. DMA is made up of a disc definition structure (DDS) area and multiple defect list (DFL) areas and the same piece of information is written on DMA #1 **105** through DMA #4 **108.**

Pointer information (which is also called "effective DFL area information" or "location information") that points to an effective one of the multiple DFL areas is stored in the DDS area, and the DFL area pointed to by that pointer information gets effective. The "effective DFL area" may be a DFL area currently used, for example. By using the DDS area and the multiple DFL areas in this manner, a write operation can be performed a greater number of times. For example, in a situation where a write operation can be normally performed 1,000 times on the information recording medium **100,** the total number of times a write operation can be performed on the information recording medium 100 using those four DFL areas will be approximately 4,000 times because a write operation can be performed 1,000 times on each of those DFL areas.

On that effective DFL area, written is address information indicating the physical block address of a block to be used next for each of the spare areas. As used herein, the "block to be used next" refers to a block on which a replacement write operation will be performed next time when another defective block is detected. By using the address information indicating the physical block address of such a block to be used next, the next block to use in that spare area can be selected more easily. In that case, the physical block address of the next block to use in the top spare area (i.e., the first spare area) and in the middle spare areas (i.e., the second through (n-1)^{th} spare areas) increases every time a block in that spare area is consumed. On the other hand, the physical block address of the next block to use in the last spare area (i.e., the n^{th} spare area) decreases every time a block in that last spare area is consumed. Writing of such pointer information on the DDS area and its update and writing of the address information on the effective DFL area and its update are performed by the information writing apparatus to be described later.

The address information described above (which will also be referred to herein as "spare area next-block-to-use address") is updated when a block in a spare area is used and when the physical block address of the next block to use changes. That is why the spare area next-block-to-use address is rewritten (or updated) relatively frequently.

Suppose the spare area next-block-to-use address is written on the DDS area, for example. In that case, that address will be rewritten frequently in the DDS area. For instance, if the maximum number of times a write operation can be performed repeatedly on the information recording medium **100** is 1,000 times, then the spare area next-block-to-use address may be rewritten on the DDS area no more than 1,000 times. This is because only one DDS area is arranged at a fixed location in each defect management area. That is to say, no other DDS area may be arranged at any different location. That is why even in a situation where there are still some unused areas left in a spare area, once the number of times of rewrite on the DDS area has exceeded the maximum number of times a write operation can be performed, the DDS area will start to deteriorate, the spare area next-block-to-use address cannot be updated anymore, and the replacement write operation can no longer be carried out, which is a problem.

However, if the physical block address of the next block to use for each of the multiple spare areas (i.e., the spare area next-block-to-use address) is to be written on a DFL area, not on the DDS area, as in the present invention, such a problem can be overcome.

Specifically, in a situation where the spare area next-block-to-use address is written on a DFL area, even if the spare area next-block-to-use address has been rewritten on the DFL area more than the maximum number of times a write operation can be performed, the spare area next-block-to-use address can still be further rewritten (or updated) by newly using another one of the multiple DFL areas in the defect management area. Also, the pointer information that points to an effective one of the multiple DFL areas is written on the DDS area. And if another DFL area is going to be newly used, that pointer information is rewritten (i.e., updated). In this manner, the number of times of rewrite on the only one DDS area that is arranged at a fixed location in the defect management area can be reduced.

It should be noted that although the only one DDS area is usually arranged at a fixed location in the defect management area, there can be multiple DDS areas if there are multiple defect management areas. In that case, the same piece of information is written at the same time on the respective DDS areas of those multiple defect management areas. That is why even if there are multiple defect management areas and multiple DDS areas, the information stored in each of those DDS areas needs to be updated the same number of times as the situation where there is only one DDS area (i.e., there is only one defect management area).

Optionally, the same piece of information could be written multiple times on a single DDS area. However, as such a piece of information is updated simultaneously everywhere, the information is updated the same number of times as a situation where the information is not written multiple times.

The preferred embodiment of the present invention described above is supposed to be applied to a quadruple-layer information recording medium. However, the present invention is also applicable in a similar manner to an information recording medium with two, three, five or any other greater number of recording layers, not just such a quadruple-layer information recording medium. For example, the present invention is similarly applicable to a triple-layer information recording medium.

FIG. **1(b)** illustrates an information recording medium **100** with three recording layers according to this preferred embodiment. In FIG. **1(b)****,** any components having substantially the same function as its counterpart shown in FIG. **1(a)** will be identified by the same reference numeral, and the description thereof will be omitted herein.

The information recording medium **100** shown in FIG. **1(b)** adopts opposite track paths. Thus, the physical block addresses are assigned so as to increase outward (i.e., from the inner edge of the disc toward its outer edge) on L0 and L2 layers, while the physical block addresses are assigned so as to increase inward (i.e., from the outer edge of the disc toward its inner edge) on L1 layer.

A replacement block for a defective block, if any, in the user data area **101** should be found in any of the top spare area **102,** the multiple middle spare areas **103** and the last spare area **104.** In performing a replacement write operation, the top spare area **102** and the middle spare areas **103** are used in the ascending order of their physical block addresses, while the last spare area **104** is used in the descending order of physical block addresses. That is to say, if a replacement block needs to be found in any of the top spare area **102** and the middle spare areas **103,** the replacement write operation should be performed on one of unused blocks in that spare area to replace that has the smallest physical block address. On the other hand, if a replacement block needs to be found in the last spare area **104,** the replacement write operation should be performed on one of unused blocks in that last spare area **104** that has the largest physical block address.

Optionally, the present invention is also similarly applicable to a parallel track path structure, not just the opposite track path structure described above.

### (EMBODIMENT 2)

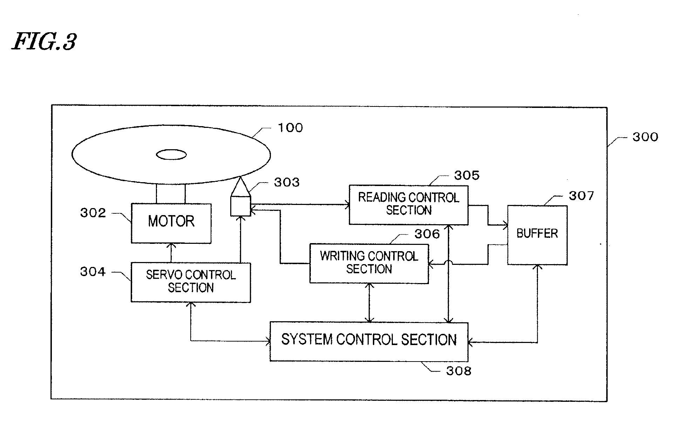

FIG. **3** is a block diagram illustrating an information writing apparatus **300** as a second specific preferred embodiment of the present invention.

In FIG. **3****,** a disc motor **302** rotates the information recording medium **100.** An optical head **303** functions as not only an irradiating section for irradiating a recording layer of the information recording medium **100** with a laser beam but also a read/write section for reading and writing data from/on the information recording medium **100.** A servo control section **304** moves the optical head **303** to a target track while controlling the rotation of the disc motor **302** being driven, thereby performing a tracking operation with the laser beam spot. A reading control section **305** demodulates a read signal that has been detected by the optical head **303,** extracts read data from it, and then stores it in a buffer **307.** A writing control section **306** modulates the write data stored in the buffer **307** and then gets the data written on the information recording medium **100** by the optical head **303.** And a system control section **308** controls the overall operation of the information writing apparatus **300.**

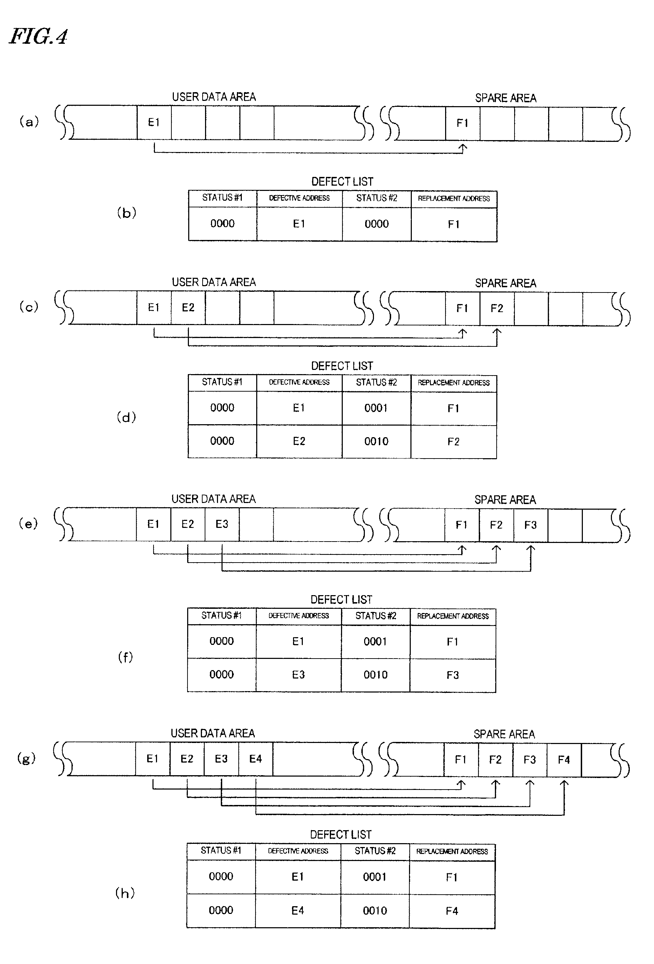

Hereinafter, it will be described with reference to FIG. **4** how the information writing apparatus **300** detects a series of defective blocks in writing data on the information recording medium **100** and finds their replacements in any of the top spare area **102** and the multiple middle spare areas **103.**

If the physical block address of a defective block that has been detected first in the user data area **101** is E1 and if the smallest one of the physical block addresses of unused blocks in the spare area to replace is F1, then a replacement for the block **E1** in the user data area is provided by the block **F1** in that spare area as shown in FIG. **4(a)****,** and a RAD entry indicating that the block **E1** has been replaced by the block **F1** is generated and then added to a defect list (DFL) as shown in FIG. **4(b)****.**

If a block **E2** that follows the defective block **E1** has also turned out to be a defective block, then a replacement for the block **E2** in the user data area is provided by a block **F2** that follows the block **F1** in that spare area as shown in FIG. **4(c)****,** and the defect list is updated so as to indicate that the block **E2** has been replaced with the block **F2** as shown in FIG. **4(d)****.** In this case, that entry is combined with the RAD entry indicating that the block **E1** has been replaced with the block **F1** to obtain a pair of CRD entries indicating that the blocks **E1** and **E2** have been replaced with the blocks **F1** and **F2,** respectively. Alternatively, two RAD entries may be used by adding a RAD entry indicating that the block **E2** has been replaced with the block **F2,** instead of using such a pair of CRD entries at this point in time. It should be noted that the CRD entry is also called a "contiguous re-allocated defect entry".

If a block **E3** that follows the defective block **E2** has also turned out to be a defective block, then a replacement for the block **E3** in the user data area is provided by a block **F3** that follows the block **F2** in that spare area as shown in FIG. **4(e)****,** and the defect list is updated so as to indicate that the block **E3** has been replaced with the block **F3** as shown in FIG. **4(f)****.** In this case, a pair of CRD entries is used to indicate that the blocks **E1** to **E3** have been replaced with the blocks **F1** to **F3,** respectively.

If a block **E4** that follows the defective block **E3** has also turned out to be a defective block, then a replacement for the block **E4** in the user data area is provided by a block **F4** that follows the block **F3** in that spare area as shown in FIG. **4(g)****,** and the defect list is updated so as to indicate that the block **E4** has been replaced with the block **F4** as shown in FIG. **4(h)****.** In this case, a pair of CRD entries is used to indicate that the blocks **E1** to **E4** have been replaced with the blocks **F1** to **F4,** respectively.

As described above, if replacements for a series of defective blocks in the user data area need to be found in any spare area other than the last spare area (the former spare area will be referred to herein as an "i^{th} spare area (where 1 ≦i<n)", then the replacement write operation is carried out collectively on a series of blocks that have a smaller physical block address than any other one of the unused blocks of the i^{th} spare area. That is to say, a series of blocks that are contiguous with each other in the ascending order of the addresses and that starts with the next block to use as designated by the defect list that has been retrieved from the defect management area are selected and the replacement write operation is carried out collectively on those blocks selected.

In this manner, if replacements for a series of defective blocks are found in any of the top spare area **102** and the middle spare areas **103,** then unused blocks in the spare area to replace are used in the ascending order of physical block addresses. As a result, a CRD entry may be used as a defect entry and the defect list can be shortened.

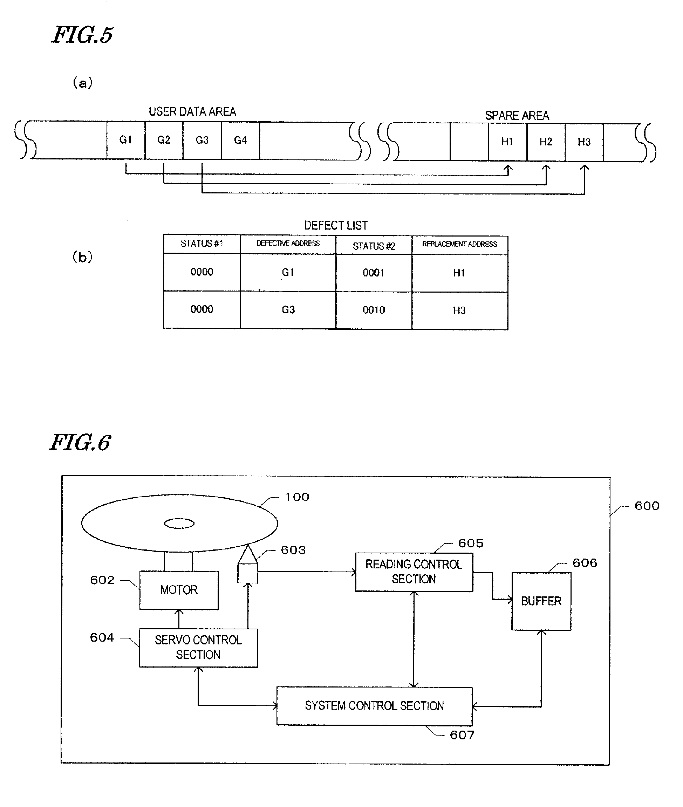

Hereinafter, it will be described with reference to FIG. **5** how the information writing apparatus **300** detects a series of defective blocks in writing data on the information recording medium **100** and finds their replacements in the last spare area **104.**

If the physical block address of a defective block that has been detected first in the user data area **101** is G1 as shown in FIG. **5(a)****,** then replacement processing is not started immediately but the next block is tested to determine whether it is a defective block or not.

If the next block with the physical block address **G2** has also turned out to be a defective block, then its following block is further tested to determine whether it is a defective block or not.

In this manner, until a normal block is found, a series of blocks to cover the data to be written are tested one after another to determine whether or not they are defective blocks.

In the example illustrated in FIG. **5(a)****,** blocks **G1** to **G3** have turned out to be defective blocks and a block **G4** has turned out to be a normal block. In such a situation, a block **H3,** to which the largest physical block address is assigned of all unused blocks of the last spare area **104,** is detected, and a series of three blocks **H1** through **H3,** including that block **H3,** are selected. Then, the data that should have been written on the series of defective blocks **G1** to **G3** is written collectively on the series of blocks **H1** to **H3** as replacement blocks.

As the last spare area **104** is consumed in the descending order of its physical block addresses, the blocks **H2** and **H1,** of which the addresses are smaller than that of the block **H3,** are selected first. That is to say, a series of blocks that are contiguous with each other in the descending order of addresses are selected from the next blocks to use as designated by the defect list that has been retrieved from the defect management area. And in performing the replacement write operation, the defective block **G1** is replaced with the block **H1,** the defective block **G2** is replaced with the block **H2,** and the defective block **G3** is replaced with the block **H3.** By carrying out the replacement write operation collectively in the ascending order of addresses on a series of blocks that are continuous with each other in the descending order in this manner, a CRD entry can also be used even for the last spare area **104.**

Then, as shown in FIG. **5(b)****,** a pair of CRD entries is generated so as to indicate that the blocks **G1** through **G3** have been replaced with the blocks **H1** through **H3,** respectively.

As described above, if the defective blocks are contiguous with each other in a situation where their replacements should be found in the last spare area **104,** then the replacement write operation can get done collectively in the ascending order, and a CRD entry can be used as a defect entry. As a result, the defect list can be shortened.

Nevertheless, in that case, if the combined size of the data to be written on those blocks exceeds the maximum size of data that can be stored in the buffer **307** of the information writing apparatus **300,** then their replacement write operation cannot get done at a time. That is why if a replacement write operation needs to be performed on the last spare area **104,** the number of blocks combined into a CRD entry is limited compared to a situation where a replacement write operation is performed on any of the top spare area **102** and the middle spare areas **103.**

FIG. **6** is a block diagram illustrating an information reading apparatus **600** for reading data from the information recording medium **100.**

In FIG. **6****,** a disc motor **602** rotates the information recording medium **100.** An optical head **603** functions as not only an irradiating section for irradiating a recording layer of the information recording medium **100** with a laser beam but also a read section for reading data from the information recording medium **100.** A servo control section **604** moves the optical head **603** to a target track while controlling the rotation of the disc motor **602** being driven, thereby performing a tracking operation with the laser beam spot. A reading control section **605** demodulates a read signal that has been detected by the optical head **603,** extracts read data from it, and then stores it in a buffer **606.** And a system control section **607** controls the overall operation of this information reading apparatus **600.**

The information reading apparatus **600** accesses DMA #1 **105** through DMA #4 **108** of the information recording medium **1**00, thereby obtaining defect management information. And instead of reading information from a defective block that has been added to the defect list of the defect management information, the information reading apparatus **600** reads information from a replacement block that is also on the defect list of the defect management information.

If a read operation needs to be performed on a defective block in the user data area **101,** which is designated by the defect management information, then data is read from a replacement block in any of the top spare area **102,** the middle spare areas **103** and the last spare area **104** as designated by the defect management information, too. If a CRD entry is used in that case, then the read operation is performed on the supposition that data has been written on a series of replacement blocks.

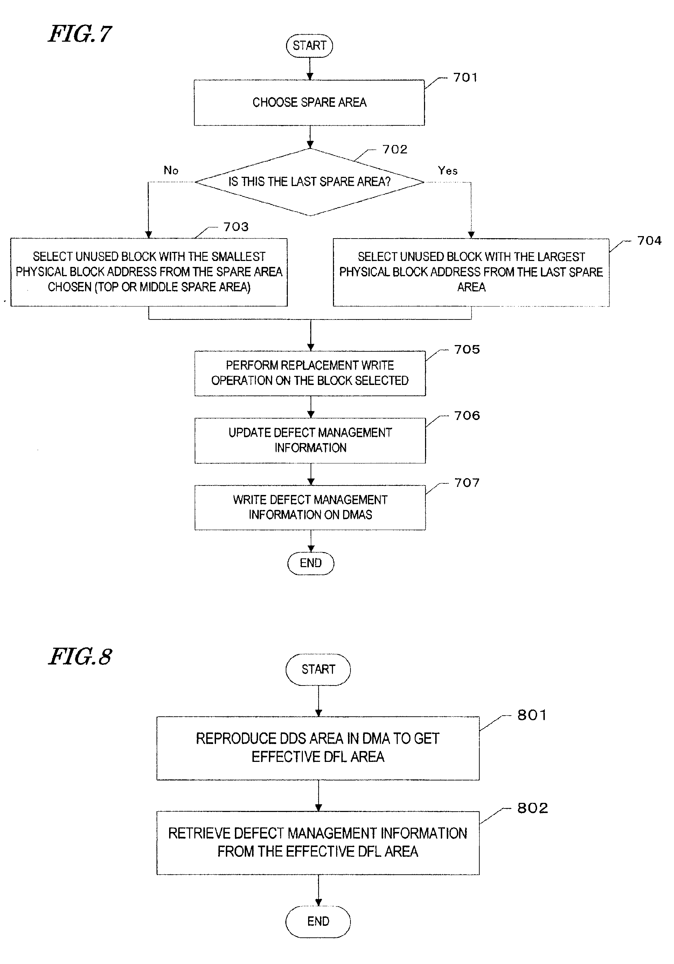

FIG. **7** is a flowchart illustrating how replacement write processing may be carried out as an example if the information writing apparatus **300** has detected any defective block while performing a write operation on the user data area **101.** Hereinafter, it will be described with reference to FIG. 7 how to get the replacement write processing done.

First, in Step **701,** a spare area to replace is chosen. The spare area to be chosen may be located on the same recording layer as, and closer to, the defective block. If no unused blocks are left anymore in such a spare area that is located on the same recording layer as, and closer to, the defective block, then the other spare area that is located on the same recording layer as, and more distant from, the defective block may be chosen. Or a spare area that is located on a different recording layer from, but closest to, the defective block could also be chosen. Still alternatively, one of the top spare area **102** and the middle spare areas **103,** in which chances of using a CRD entry are high, may be given a higher priority than the last spare area **104.**

Next, in Step **702,** it is determined whether or not the spare area **701** chosen in the previous processing step **701** is the last spare area **104.** If the answer is NO (i.e., if the spare area chosen is not the last spare area **104** but any of the top spare area **102** and the middle spare areas **103**), the process advances to Step **703.** On the other hand, if the answer is YES, then the process advances to Step **704.**

In the processing step **703,** one of the unused blocks that has the smallest physical block address is chosen as a replacement block from the spare area that has been chosen in the processing step **701.**

On the other hand, in the processing step **704,** one of the unused blocks that has the largest physical block address is chosen as a replacement block from the spare area that has been chosen in the processing step **701.**

Subsequently, in Step **705,** the data that should have been written on the defective block is written on the replacement block that has been chosen in the previous processing step **704.**

Thereafter, in Step **706,** the defect management information is updated so as to indicate that the data that should have been written on the defective block has been written on the replacement block instead. In that case, if a replacement write operation has also been performed on the block preceding the defective block and if a CRD entry can be used as a defect entry, then the CRD entry is used.

Finally, in Step **707,** the defect management information that has been updated in the previous processing step **706** is written on DMA #1 **105** to DMA #4 **108.**

By performing these processing steps, a replacement write operation can get done in a situation where a defective block has been detected.

If there are a series of defective blocks, a series of unused blocks may be chosen as their replacement blocks in one of the processing steps **703** and **704** and then the replacement write operation may get done collectively on those blocks in the processing step **705.**

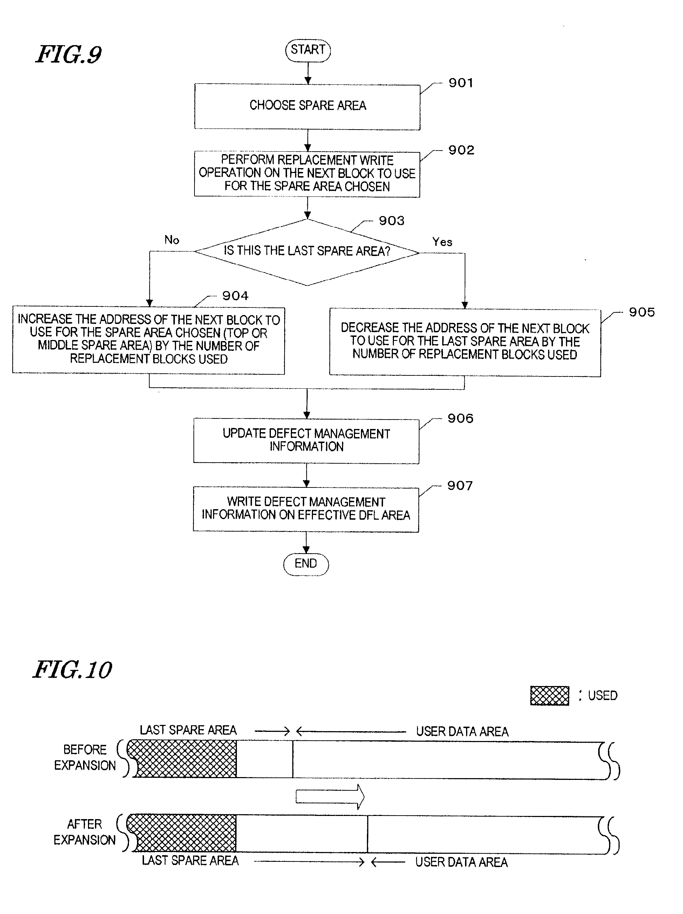

Hereinafter, it will be described with reference to the flowchart shown in FIGS. **8** and **9** how to get replacement write processing done on an information recording medium **100** in which the defect management areas **DMA** have the arrangement shown in FIG. **2****.**

FIG. **8** is a flowchart showing how to get the processing of retrieving defect management information done when the information recording medium **100** is loaded into an apparatus, for example.

First, in Step **801,** the DDS area of those DMA is accessed to get pointer information and locate an effective DFL area pointed to by the pointer information. That is to say, information about the location of the effective DFL area is retrieved from the DDS area.

Next, in Step **802,** the physical block address of the next block to use for each spare area and the defect list are retrieved as defect management information from the effective DFL area, which has been gotten in the previous processing step **801,** and then are stored in the buffer **307.**

FIG. **9** is a flowchart showing how replacement write processing may get done in a situation where a defective block is detected while a write operation is being performed on the user data area **101.**

First, in Step **901,** a spare area to replace is chosen in the same way as in the processing step **701,** for example.

Next, in Step **902,** a replacement write operation is performed on a block identified by the physical block address of the next block to use in that spare area chosen.

Then, in Step **903,** it is determined whether or not the spare area chosen in the processing step **901** is the last spare area **104.** If the answer is NO (i.e., if it is any of the top spare area **102** and the middle spare areas **103,** not the last spare area **104),** the process advances to Step **904.** On the other hand, if the answer is YES (i.e., if it is the last spare area **104),** then the process advances to Step **905.**

In the processing step **904,** the address information indicating the physical block address of the next block to use in the spare area that has been chosen in the processing step **901** is updated. More specifically, it is increased by the number of blocks on which the replacement write operation has been performed. As a result, the address information is updated so that one of the unused blocks that has the smallest physical block address is shown.

On the other hand, in the processing step **905,** the address information indicating the physical block address of the next block to use in the last spare area **104** is updated. More specifically, it is decreased by the number of blocks on which the replacement write operation has been performed. As a result, the address information is updated so that one of the unused blocks that has the largest physical block address is shown.

Thereafter, in Step **906,** an entry indicating that the data that should have been written on the defective block has been written on the replacement block is added to the defect list, thereby updating the defect management information.

Finally, in Step **907,** the physical block address of the next block to use in each spare area, which has been updated in the previous processing step **904** or **905,** and the defect list that has been updated in the processing step **906** are written as defect management information on the effective DFL area of DMA #1 **105** through DMA #4 **108.**

By performing these processing steps, a replacement write operation can be performed if any defective block has been detected.

If replacement blocks for a series of defective blocks need to be found in any of the top spare area **102** and the middle spare areas **103,** then the replacement write operation is performed in the ascending order on a series of blocks that starts with the next block to use for that spare area. On the other hand, if replacement blocks for a series of defective blocks need to be found in the last spare area **104,** then the replacement write operation may be performed in the following manner. Specifically, if the number of the defective blocks in the series is m, a block, of which the address is specified by subtracting the addresses of (m-1) blocks from the physical block address of the next block to use for the last spare area, is selected. And the replacement write operation is performed in the ascending order on a series of blocks that starts with that block selected. As a result, the replacement write operation can get done collectively in the ascending order on a series of blocks including the next block to use as specified by the address information.

Optionally, when a replacement write operation is performed collectively on a series of defective blocks, the blocks in the last spare area **104** could be used in the descending order. In that case, however, the size of the defect list would increase.

Next, it will be described with reference to FIG. **10** how the information writing apparatus **300** expands the spare area of the information recording medium **100.**

The boundary between the last spare area **104** and the user data area **101** of the information recording medium **100** is shifted in such a direction as to increase the size of the last spare area **104** as shown in FIG. **10****.** This can be done by either updating the physical block address information of the boundary between the last spare area **104** and the user data area **101** or updating the size information of the last spare area **104.**

The last spare area **104** of the information recording medium **100** is used in the descending order of physical block addresses, and therefore, is consumed from one end thereof that is more distant from the user data area **101.** That is to say, as the other end thereof that is closer to the user data area **101** remains unused, the expanded area to be defined by shifting the boundary between the last spare area **104** and the user data area **101** in such a direction as to expand the last spare area **104** will be continuous with the unused block of the last spare area **104** that has not been expanded yet as shown in FIG. **10****.** That is why the spare area can be expanded easily just by updating the information about the boundary between the last spare area **104** and the user data area **101.**

Next, it will be described briefly how to make the multilayer information recording medium of the present invention. Specifically, L0, L1, L2 and L3 layers, on which tracks to record an information signal in accordance with an address signal or control data have been cut, are formed in this order on a disc substrate. As a result, recording layers, of which the user data area, defect management areas and spare areas are arranged as shown in FIG. **1(a)** or **1(b)****,** can be obtained. Optionally, a spacer layer may be inserted between two adjacent ones of the recording layers and/or a cover layer may be arranged on the recording layer.

As described above, a multilayer information recording medium according to the present invention has multiple recording layers, and includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The n^{th} spare area, to which a larger physical block address is assigned than any other one of the spare areas, is used in the descending order of its physical block addresses. On the other hand, the first through (n-1)^{th} spare areas, other than the n^{th} spare area, are used in the ascending order of their physical block addresses.

In one preferred embodiment, the multilayer information recording medium further includes a defect management area, in which stored is information indicating the physical block address of a block to be used next for each of the spare areas.

In another preferred embodiment, the multilayer information recording medium further includes a defect management area in which a defect list is stored. The defect list includes a contiguous replacement entry, which indicates that a replacement write operation is performed between a series of defective blocks in the user data area and a series of blocks in the spare areas.

An information writing apparatus according to the present invention is an apparatus for writing information on a multilayer information recording medium with multiple recording layers. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. If a replacement block for the defective block in the user data area needs to be found in the n^{th} spare area, to which a larger physical block address is assigned than any other one of the spare areas, the apparatus uses one of unused blocks of the n^{th} spare area that has the largest physical block address. But if a replacement block for the defective block in the user data area needs to be found in an i^{th} spare area (where 1 ≦ i < n), other than the n^{th} spare area, the apparatus uses one of unused blocks of the i^{th} spare area that has the smallest physical block address.

An information writing method according to the present invention is a method for writing information on a multilayer information recording medium with multiple recording layers. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The information writing method includes the steps of: (a) choosing one of the spare areas to provide a replacement block for the defective block in the user data area; if the spare area chosen in the step (a) is the n^{th} spare area, to which the largest physical block address is assigned of all the spare areas, (b) selecting one of unused blocks of the n^{th} spare area that has the largest physical block address; but if the spare area chosen in the step (a) is an i^{th} spare area (where 1 ≦ i <n) , other than the n^{th} spare area, (c) selecting one of unused blocks of the i^{th} spare area that has the smallest physical block address; and (d) writing data on the replacement block that has been selected in the step (b) or (c).

An information reading apparatus according to the present invention is an apparatus for reading information from a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area to store defect management information. Physical block addresses are assigned to respective blocks that are read/write units for the multilayer information recording medium. The n^{th} spare area, to which a larger physical block address is assigned than any other one of the spare areas, is used in the descending order of its physical block addresses. On the other hand, the first through (n-1)^{th} spare areas, other than the n^{th} spare area, are used in the ascending order of their physical block addresses. The information reading apparatus retrieves the defect management information from the defect management area, and reads information from a replacement block, which is designated by the defect management information, instead of a defective block that is also designated by the defect management information.

Another information writing apparatus according to the present invention is an apparatus for writing information on a multilayer information recording medium with multiple recording layers. The multilayer information recording medium includes: a user data area on which user data is going to be written; first through n^{th} spare areas (where n is an integer that is equal to or greater than four) for providing a replacement block for a defective block, if any, in the user data area; and a defect management area. Physical block addresses are assigned to respective blocks that are read/write units for the multilayer information recording medium. In the defect management area, stored is information indicating the physical block address of a block to be used next for each of the spare areas. If a replacement block for a defective block in the user data area needs to be found in the n^{th} spare area, to which a larger physical block address is assigned than any other one of the spare areas, the information writing apparatus writes data on the next block to use for the n^{th} spare area and updates the information indicating the physical block address of the next block to use for the n^{th} spare area into a value decreased by the number of the replacement blocks used. But if a replacement block for a defective block in the user data area needs to be found in an i^{th} spare area (where 1 ≦ i < n), other than the n^{th} spare area, the information writing apparatus writes data on the next block to use for the i^{th} spare area and updates the information indicating the physical block address of the next block to use for the i^{th} spare area into a value increased by the number of the replacement blocks used.

Another information writing method according to the present invention is a method for writing information on a multilayer information recording medium with multiple recording layers. The multilayer information recording medium includes: a user data area on which user data is going to be written; first through n^{th} spare areas (where n is an integer that is equal to or greater than four) for providing a replacement block for a defective block, if any, in the user data area; and a defect management area. Physical block addresses are assigned to respective blocks that are read/write units for the multilayer information recording medium. In the defect management area, stored is information indicating the physical block address of a block to be used next for each of the spare areas. The information writing method includes the steps of: (a) retrieving information indicating the physical block address of a block to be used next from the defect management area; (b) choosing one of the spare areas to provide a replacement block for the defective block in the user data area; (c) writing data on the next block to use for the spare area that has been chosen in the step (b); if the spare area chosen in the step (b) is the n^{th} spare area, to which a larger physical block address is assigned than any other one of the spare areas, (d) updating the information indicating the physical block address of the next block to use for the n^{th} spare area into a value decreased by the number of the replacement blocks used; but if the spare area chosen in the step (b) is an i^{th} spare area (where 1 ≦i <n), other than the n^{th} spare area, (e) updating the information indicating the physical block address of the next block to use for the i^{th} spare area into a value increased by the number of the replacement blocks used; and (f) writing the information indicating the physical block address of the next block to use that has been updated in the step (d) or (e) in the defect management area.

Another multilayer information recording medium according to the present invention has multiple recording layers on which information is written by the information writing apparatus of the present invention. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The multilayer information recording medium further includes a defect management area to store information indicating the physical block address of a block to be used next for each of the spare areas.

Another information reading apparatus according to the present invention is an apparatus for reading information from the multilayer information recording medium of the present invention described above. The information reading apparatus retrieves defect management information from the defect management area, and reads information from a replacement block, which is designated by the defect management information, instead of a defective block that is also designated by the defect management information.

Another multilayer information recording medium according to the present invention has multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The DDS area stores pointer information that points to an effective one of the DFL areas. The effective DFL area stores information indicating the physical block address of a block to be used next for each of the spare areas.

Still another information writing apparatus according to the present invention is an apparatus for writing information on a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The information writing apparatus writes pointer information that points to an effective one of the DFL areas on the DDS area, and also writes information indicating the physical block address of a block to be used next for each of the spare areas on the effective DFL area.

Still another information writing method according to the present invention is a method for writing information on a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The information writing method includes the steps of: writing pointer information that points to an effective one of the DFL areas on the DDS area; and writing information indicating the physical block address of a block to be used next for each of the spare areas on the effective DFL area.

Still another information reading apparatus according to the present invention is an apparatus for reading information from a multilayer information recording medium with multiple recording layers. The recording medium includes: a user data area on which user data is going to be written; first through n^{th} spare areas (where n is an integer that is equal to or greater than four) for providing a replacement block for a defective block, if any, in the user data area; and a defect management area, which includes a DDS area and multiple DFL areas. Physical block addresses are assigned to respective blocks that are read/write units for the multilayer information recording medium. The DDS area stores pointer information that points to an effective one of the DFL areas. The effective DFL area stores information indicating the physical block address of a block to be used next for each of the spare areas. The information reading apparatus retrieves the pointer information from the DDS area, and also retrieves the information indicating the physical block address of the next block to use from the effective DFL area pointed to by the pointer information.

Yet another information writing apparatus according to the present invention is an apparatus for writing information on a multilayer information recording medium with multiple recording layers. The recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. If replacement blocks for a series of defective blocks in the user data area need to be found in the n^{th} spare area, to which a larger physical block address is assigned than any other one of the spare areas, the information writing apparatus writes data collectively on contiguous ones of unused blocks of the n^{th} spare area that have the largest physical block address. But if replacement blocks for the series of defective blocks in the user data area need to be found in an i^{th} spare area (where 1≦i < n) , other than the n^{th} spare area, the information writing apparatus writes data collectively on contiguous ones of unused blocks of the i^{th} spare area that have the smallest physical block address.

In one preferred embodiment, the multilayer information recording medium further includes a defect management area, in which stored is information indicating the physical block address of a block to be used next for each of the spare areas. If replacement blocks for the series of defective blocks in the user data area need to be found in the n^{th} spare area, the information writing apparatus selects blocks that start with the next block to use for the n^{th} spare area and are contiguous with each other in the descending order of the addresses, writes data collectively, in the ascending order of the addresses, on those replacement blocks that are contiguous with each other in the descending order, and updates the information indicating the physical block address of the next block to use for the n^{th} spare area into a value decreased by the number of the replacement blocks used. But if replacement blocks for the series of defective blocks in the user data area need to be found in the i^{th} spare area, the information writing apparatus writes data collectively, in the ascending order of the addresses, on a series of replacement blocks that starts with the next block to use for the i^{th} spare area, and updates the information indicating the physical block address of the next block to use for the i^{th} spare area into a value increased by the number of the replacement blocks used.

Yet another information writing method according to the present invention is a method for writing information on a multilayer information recording medium with multiple recording layers. The multilayer information recording medium includes: a user data area on which user data is going to be written; and first through n^{th} spare areas (where n is an integer that is equal to or greater than four) for providing a replacement block for a defective block, if any, in the user data area. Physical block addresses are assigned to respective blocks that are read/write units for the multilayer information recording medium. The information writing method includes the steps of: (a) choosing one of the spare areas to provide replacement blocks for a series of defective blocks in the user data area; if the spare area chosen in the step (a) is the n^{th} spare area, to which a larger physical block address is assigned than any other one of the spare areas, (b) selecting contiguous ones of unused blocks of the n^{th} spare area that have the largest physical block address; but if the spare area chosen in the step (a) is an i^{th} spare area (where 1≦ i <n) , other than the n^{th} spare area, (c) selecting contiguous ones of unused blocks of the i^{th} spare area that have the smallest physical block address; and (d) writing data collectively on those contiguous replacement blocks that have been selected in the step (b) or (c).

In one preferred embodiment, the multilayer information recording medium further includes a defect management area, in which stored is information indicating the physical block address of a block to be used next for each of the spare areas. The information writing method further includes the step (e) of retrieving information indicating the physical block address of the next block to use from the defect management area. If the spare area chosen in the step (a) is the n^{th} spare area, the step (b) includes selecting blocks that start with the next block to use for the n^{th} spare area and that are contiguous with each other in the descending order of the addresses, and the step (d) includes writing data collectively, in the ascending order of the addresses, on those blocks that are contiguous with each other in the descending order. But if the spare area chosen in the step (a) is the i^{th} spare area, the step (d) includes writing data collectively, in the ascending order of the addresses, on those blocks that start with the next block to use for the i^{th} spare area. The information writing method further includes the steps of: if data has been written on the replacement blocks in the n^{th} spare area, (f) updating the information indicating the physical block address of the next block to use for the n^{th} spare area into a value decreased by the number of the replacement blocks used; but if data has been written on the replacement blocks in the i^{th} spare area, (g) updating the information indicating the physical block address of the next block to use for the i^{th} spare area into a value increased by the number of the replacement blocks used; and (h) writing the information indicating the physical block address of the next block to use, which has been updated in the step (f) or (g), on the defect management area.

Another multilayer information recording medium according to the present invention has multiple recording layers and includes: a user data area on which user data is going to be written; and first through n^{th} spare areas that provide a replacement block for any defective block in the user data area. Physical block addresses are assigned to respective blocks that are read/write units for the multilayer information recording medium. The n^{th} spare area, to which a larger physical block address is assigned than any other one of the spare areas, is used in the descending order of its physical block addresses. On the other hand, an i^{th} spare area (where 1 ≦i < n), other than the spare area to which the largest physical block address is assigned of all the spare areas, is used in the ascending order of its physical block addresses.

In one preferred embodiment, the multilayer information recording medium further includes a defect management area, which has a defect list. The defect list includes a contiguous replacement entry, which indicates that a series of defective blocks in the user data area have been replaced with a series of blocks in any of the multiple spare areas.

In another preferred embodiment, the multilayer information recording medium further includes a defect management area, which has physical block address information of a block to be used next for each of the spare areas.

In still another preferred embodiment, the defect management area is made up of a DDS area and multiple DFL areas. The DDS area has pointer information that points to an effective one of the DFL areas. The effective DFL area has physical block address information of a block to be used next for each of the spare areas.

In yet another preferred embodiment, the multilayer information recording medium is a rewritable one.

In yet another preferred embodiment, the multilayer information recording medium has opposite track paths.

An information writing apparatus according to the present invention is designed to write information on a multilayer information recording medium with multiple recording layers. The multilayer information recording medium includes: a user data area on which user data is going to be written; and first through n^{th} spare areas that provide a replacement block for any defective block in the user data area. Physical block addresses are assigned to respective blocks that are read/write units for the multilayer information recording medium. If a replacement block for the defective block in the user data area needs to be found in the n^{th} spare area, to which a larger physical block address is assigned than any other one of the spare areas, the information writing apparatus uses one of unused blocks of the n^{th} spare area that has the largest physical block address. But if a replacement block for the defective block in the user data area needs to be found in an i^{th} spare area (where 1 ≦i < n), other than the spare area to which the largest physical block address is assigned of all the spare areas, the information writing apparatus uses one of unused blocks of the i^{th} spare area that has the smallest physical block address.

Another information writing apparatus according to the present invention is also designed to write information on a multilayer information recording medium with multiple recording layers. The multilayer information recording medium includes: a user data area on which user data is going to be written; and first through n^{th} spare areas that provide a replacement block for any defective block in the user data area. Physical block addresses are assigned to respective blocks that are read/write units for the multilayer information recording medium. If replacement blocks for a series of defective blocks in the user data area need to be found in the n^{th} spare area, to which a larger physical block address is assigned than any other one of the spare areas, the information writing apparatus writes data collectively on contiguous ones of unused blocks of the n^{th} spare area that have the largest physical block address. But if replacement blocks for the series of defective blocks in the user data area need to be found in an i^{th} spare area (where 1≦ i < n) , other than the spare area to which the largest physical block address is assigned of all the spare areas, the information writing apparatus writes data collectively on contiguous ones of unused blocks of the i^{th} spare area that have the smallest physical block address.

Still another information writing apparatus according to the present invention is also designed to write information on a multilayer information recording medium with multiple recording layers. The multilayer information recording medium includes: a user data area on which user data is going to be written; first through n^{th} spare areas that provide a replacement block for any defective block in the user data area; and a defect management area. Physical block addresses are assigned to respective blocks that are read/write units for the multilayer information recording medium. In the defect management area, stored is at least information indicating the physical block address of a block to be used next for each of the spare areas. If a replacement block for a defective block in the user data area needs to be found in the n^{th} spare area, to which a larger physical block address is assigned than any other one of the spare areas, the information writing apparatus writes data on the block identified by the physical block address information of the next block to use for the n^{th} spare area and updates the physical block address information of the next block to use for the n^{th} spare area into a value decreased by the number of the replacement blocks used. But if a replacement block for a defective block in the user data area needs to be found in an i^{th} spare area (where 1 ≦ i < n), other than the spare area to which the largest physical block address is assigned of all the spare areas, the information writing apparatus writes data on the block identified by the physical block address information of the next block to use for the i^{th} spare area and updates the physical block address information of the next block to use for the i^{th} spare area into a value increased by the number of the replacement blocks used.

Yet another information writing apparatus according to the present invention is designed to write information on a multilayer information recording medium with multiple recording layers. The multilayer information recording medium includes: a user data area on which user data is going to be written; first through n^{th} spare areas that provide a replacement block for any defective block in the user data area; and a defect management area. Physical block addresses are assigned to respective blocks that are read/write units for the multilayer information recording medium. In the defect management area, stored is at least information indicating the physical block address of a block to be used next for each of the spare areas. If replacement blocks for a series of defective blocks in the user data area need to be found in the n^{th} spare area, to which a larger physical block address is assigned than any other one of the spare areas, the information writing apparatus writes data collectively on a series of blocks, which are defined by subtracting the number of the replacement blocks from the block identified by the physical block address information of the next block to use for the n^{th} spare area, and updates the physical block address information of the next block to use for the n^{th} spare area into a value decreased by the number of the replacement blocks used. But if replacement blocks for the series of defective blocks in the user data area need to be found in an i^{th} spare area (where 1 ≦i < n), other than the spare area to which the largest physical block address is assigned of all the spare areas, the information writing apparatus writes data collectively on a series of replacement blocks, which starts with the block identified by the physical block address information of the next block to use for the i^{th} spare area, and updates the physical block address information of the next block to use for the i^{th} spare area into a value increased by the number of the replacement blocks used.

Yet another information writing apparatus according to the present invention is designed to write information on a multilayer information recording medium with multiple recording layers. The multilayer information recording medium includes: a user data area on which user data is going to be written; first through n^{th} spare areas that provide a replacement block for any defective block in the user data area; and a defect management area, which is made up of a DDS area and multiple DFL areas. Physical block addresses are assigned to respective blocks that are read/write units for the multilayer information recording medium. In the DDS area, stored is at least pointer information that points to an effective one of the DFL areas. In the effective DFL area, stored is at least the physical block address information of a block to be used next for each of the spare areas. If a replacement block for a defective block in the user data area needs to be found in the n^{th} spare area, to which a larger physical block address is assigned than any other one of the spare areas, the information writing apparatus writes data on the block identified by the physical block address information of the next block to use for the n^{th} spare area and updates the physical block address information of the next block to use for the n^{th} spare area into a value decreased by the number of the replacement blocks used. But if a replacement block for a defective block in the user data area needs to be found in an i^{th} spare area (where 1 ≦ i < n), other than the spare area to which the largest physical block address is assigned of all the spare areas, the information writing apparatus writes data on the block identified by the physical block address information of the next block to use for the i^{tn} spare area and updates the physical block address information of the next block to use for the i^{th} spare area into a value increased by the number of the replacement blocks used.

Yet another information writing apparatus according to the present invention is designed to write information on a multilayer information recording medium with multiple recording layers. The multilayer information recording medium includes: a user data area on which user data is going to be written; first through n^{th} spare areas that provide a replacement block for any defective block in the user data area; and a defect management area, which is made up of a DDS area and multiple DFL areas. Physical block addresses are assigned to respective blocks that are read/write units for the multilayer information recording medium. In the DDF area, stored is at least pointer information that points to an effective one of the DFL areas. In the effective DFL area, stored is at least the physical block address information of a block to be used next for each of the spare areas. If replacement blocks for a series of defective blocks in the user data area need to be found in the n^{th} spare area, to which a larger physical block address is assigned than any other one of the spare areas, the information writing apparatus writes data collectively on a series of blocks, which are defined by subtracting the number of the replacement blocks from the block identified by the physical block address information of the next block to use for the n^{th} spare area, and updates the physical block address information of the next block to use for the n^{th} spare area into a value decreased by the number of the replacement blocks used. But if replacement blocks for the series of defective blocks in the user data area need to be found in an i^{th} spare area (where 1 ≦i < n) , other than the spare area to which the largest physical block address is assigned of all the spare areas, the information writing apparatus writes data collectively on a series of replacement blocks, which starts with the block identified by the physical block address information of the next block to use for the i^{th} spare area, and updates the physical block address information of the next block to use for the i^{th} spare area into a value increased by the number of the replacement blocks used.

An information writing method according to the present invention is designed to write information on a multilayer information recording medium with multiple recording layers. The multilayer information recording medium includes: a user data area on which user data is going to be written; and first through n^{th} spare areas that provide a replacement block for any defective block in the user data area. Physical block addresses are assigned to respective blocks that are read/write units for the multilayer information recording medium. The method includes the steps of: (a) choosing one of the spare areas to provide a replacement block for the defective block in the user data area; if the spare area chosen in the step (a) is an n^{th} spare area, to which a larger physical block address is assigned than any other one of the spare areas, (b) selecting one of unused blocks of the n^{th} spare area that has the largest physical block address; but if the spare area chosen in the step (a) is an i^{th} spare area (where 1≦5 i < n) , other than the spare area to which the largest physical block address is assigned of all the spare areas, (c) selecting one of unused blocks of the i^{th} spare area that has the smallest physical block address; and (d) writing data on the replacement block that has been selected in the step (b) or (c).

Another information writing method according to the present invention is also designed to write information on a multilayer information recording medium with multiple recording layers. The multilayer information recording medium includes: a user data area on which user data is going to be written; and first through n^{th} spare areas that provide a replacement block for any defective block in the user data area. Physical block addresses are assigned to respective blocks that are read/write units for the multilayer information recording medium. The method includes the steps of: (a) choosing one of the spare areas to provide replacement blocks for a series of defective blocks in the user data area; if the spare area chosen in the step (a) is an n^{th} spare area, to which a larger physical block address is assigned than any other one of the spare areas, (b) selecting contiguous ones of unused blocks of the n^{th} spare area that have the largest physical block address; but if the spare area chosen in the step (a) is an i^{th} spare area (where 1 ≦i < n), other than the spare area to which the largest physical block address is assigned of all the spare areas, (c) selecting contiguous ones of unused blocks of the i^{th} spare area that have the smallest physical block address; and (d) writing data collectively on the replacement blocks that have been selected in the step (b) or (c).

Still another information writing method according to the present invention is also designed to write information on a multilayer information recording medium with multiple recording layers. The multilayer information recording medium includes: a user data area on which user data is going to be written; first through n^{th} spare areas that provide a replacement block for any defective block in the user data area; and a defect management area. Physical block addresses are assigned to respective blocks that are read/write units for the multilayer information recording medium. In the defect management area, stored is at least information indicating the physical block address of a block to be used next for each of the spare areas. The method includes the steps of: (a) retrieving the physical block address information of a block to be used next for each of the spare areas from the defect management area; (b) choosing one of the spare areas to provide a replacement block for the defective block in the user data area; (c) writing data on a block identified by the physical block address information of the next block to use for the spare area that has been chosen in the step (b); if the spare area chosen in the step (b) is an n^{th} spare area, to which a larger physical block address is assigned than any other one of the spare areas, (d) updating the physical block address information of the next block to use for the n^{th} spare area into a value decreased by the number of the replacement blocks used in the step (c); but if the spare area chosen in the step (b) is an i^{th} spare area (where 1 ≦ i < n), other than the spare area to which the largest physical block address is assigned of all the spare areas, (e) updating the physical block address information of the next block to use for the i^{th} spare area into a value increased by the number of the replacement blocks used in the step (c); and (f) writing the physical block address information of the next block to use that has been updated in the step (d) or (e) in the defect management area.

Yet another information writing method according to the present invention is also designed to write information on a multilayer information recording medium with multiple recording layers. The multilayer information recording medium includes: a user data area on which user data is going to be written; first through n^{th} spare areas that provide a replacement block for any defective block in the user data area; and a defect management area. Physical block addresses are assigned to respective blocks that are read/write units for the multilayer information recording medium. In the defect management area, stored is at least information indicating the physical block address of a block to be used next for each of the spare areas. The method includes the steps of: (a) retrieving the physical block address information of a block to be used next for each of the spare areas from the defect management area; (b) choosing one of the spare areas to provide replacement blocks for a series of defective blocks in the user data area; (c) if the spare area chosen in the step (b) is an n^{th} spare area, to which a larger physical block address is assigned than any other one of the spare areas, writing data on a series of blocks, which are defined by subtracting the number of the replacement blocks from the block identified by the physical block address information of the next block to use for the n^{th} spare area, but if the spare area chosen in the step (b) is an i^{th} spare area (where 1 ≦ i < n) , other than the spare area to which the largest physical block address is assigned of all the spare areas, writing data on a series of replacement blocks, which starts with the block identified by the physical block address information of the next block to use for the i^{th} spare area; if the spare area chosen in the step (b) is the n^{th} spare area, (d) updating the physical block address information of the next block to use for the n^{th} spare area into a value decreased by the number of the replacement blocks used in the step (c); but if the spare area chosen in the step (b) is the i^{th} spare area, (e) updating the physical block address information of the next block to use for the i^{th} spare area into a value increased by the number of the replacement blocks used in the step (c); and (f) writing the physical block address information of the next block to use that has been updated in the step (d) or (e) in the defect management area.

Yet another information writing method according to the present invention is also designed to write information on a multilayer information recording medium with multiple recording layers. The multilayer information recording medium includes: a user data area on which user data is going to be written; first through n^{th} spare areas that provide a replacement block for any defective block in the user data area; and a defect management area, which is made up of a DDS area and multiple DFL areas. Physical block addresses are assigned to respective blocks that are read/write units for the multilayer information recording medium. In the DDS area, stored is at least pointer information that points to an effective one of the DFL areas. In the effective DFL area, stored is at least the physical block address information of a block to be used next for each of the spare areas. The method includes the steps of: (a) retrieving the pointer information, which points to the effective one of the DFL areas, from the DDS area; (b) making reference to the pointer information that points to the effective DFL area and that has been retrieved in the step (a) and retrieving the physical block address information of a block to be used next for each of the spare areas from the effective DFL area; (c) choosing one of the spare areas to provide a replacement block for the defective block in the user data area; (d) writing data on a replacement block identified by the physical block address information of the next block to use for the spare area chosen in the step (c); if the spare area chosen in the step (c) is the n^{th} spare area, to which a larger physical block address is assigned than any other one of the spare areas, (e) updating the physical block address information of the next block to use for the n^{th} spare area into a value decreased by the number of the replacement blocks used in the step (d), but if the spare area chosen in the step (c) is the i^{th} spare area (where 1 ≦ i < n), other than the spare area to which the largest physical block address is assigned of all the spare areas, (f) updating the physical block address information of the next block to use for the i^{th} spare area into a value increased by the number of the replacement blocks used in the step (d); and (g) writing the physical block address information of the next block to use that has been updated in the step (e) or (f) in the effective DFL area.

Yet another information writing method according to the present invention is also designed to write information on a multilayer information recording medium with multiple recording layers. The multilayer information recording medium includes: a user data area on which user data is going to be written; first through n^{th} spare areas that provide a replacement block for any defective block in the user data area; and a defect management area, which is made up of a DDS area and multiple DFL areas. Physical block addresses are assigned to respective blocks that are read/write units for the multilayer information recording medium. In the DDS area, stored is at least pointer information that points to an effective one of the DFL areas. In the effective DFL area, stored is at least the physical block address information of a block to be used next for each of the spare areas. The method includes the steps of: (a) retrieving the pointer information, which points to the effective one of the DFL areas, from the DDS area; (b) making reference to the pointer information that points to the effective DFL area and that has been retrieved in the step (a) and retrieving the physical block address information of a block to be used next for each of the spare areas from the effective DFL area; (c) choosing one of the spare areas to provide replacement blocks for a series of defective blocks in the user data area; (d) if the spare area chosen in the step (c) is an n^{th} spare area, to which a larger physical block address is assigned than any other one of the spare areas, writing data on a series of blocks, which are defined by subtracting the number of the replacement blocks from the block identified by the physical block address information of the next block to use for the n^{th} spare area, but if the spare area chosen in the step (c) is an i^{th} spare area (where 1≦ i < n), other than the spare area to which the largest physical block address is assigned of all the spare areas, writing data on a series of replacement blocks, which starts with the block identified by the physical block address information of the next block to use for the i^{th} spare area; if the spare area chosen in the step (c) is the n^{th} spare area, (e) updating the physical block address information of the next block to use for the n^{th} spare area into a value decreased by the number of the replacement blocks used in the step (d); but if the spare area chosen in the step (c) is the i^{th} spare area, (f) updating the physical block address information of the next block to use for the i^{th} spare area into a value increased by the number of the replacement blocks used in the step (d); and (g) writing the physical block address information of the next block to use that has been updated in the step (e) or (f) in the effective DFL area.

While the present invention has been described with respect to specific preferred embodiments thereof, it will be apparent to those skilled in the art that the disclosed invention may be modified in numerous ways and may assume many embodiments other than those specifically described above. Accordingly, it is intended that the present invention is not limited to any particular disclosure but its scope is defined only by the appended claims.

### INDUSTRIAL APPLICABILITY

According to the present invention, the top spare area and middle spare areas of a disklike information recording medium are used in the ascending order of their physical block addresses and the last spare area is used in the descending order of its physical block addresses, thereby expanding the spare areas easily with the size of the defect management information reduced. Thus, the present invention is applicable for use to an external storage device for a host computer and an information recording medium to be loaded into the storage device. The present invention can be used particularly effectively in the technical field of optical discs.

### REFERENCE SIGNS LIST

- 100: information recording medium
- 101: user data areas
- 102: top spare area
- 103: middle spare areas
- 104: last spare area
- 105: DMA1
- 106: DMA2
- 107: DMA3
- 108: DMA4
- 300: information writing apparatus
- 302: disc motor
- 303: optical head
- 304: servo control section
- 305: reading control section
- 306: writing control section
- 307: buffer
- 308: system control section
- 600: information reading apparatus
- 602: disc motor
- 603: optical head
- 604: servo control section
- 605: reading control section
- 606: buffer
- 607: system control section

## Claims

1. A multilayer information recording medium with multiple recording layers, the recording medium comprising:
a user data area on which user data is going to be written; and
first through n^{th} spare areas (where n is an integer that is equal to or greater than four) for providing a replacement block for a defective block, if any, in the user data area, and
wherein physical block addresses are assigned to respective blocks that are read/write units for the multilayer information recording medium, and
wherein the n^{th} spare area, to which a larger physical block address is assigned than any other one of the spare areas, is used in the descending order of its physical block addresses, and
wherein the first through (n-1)^{th} spare areas, other than the n^{th} spare area, are used in the ascending order of their physical block addresses.

2. The multilayer information recording medium of claim 1, further comprising a defect management area,
wherein in the defect management areas, stored is information indicating the physical block address of a block to be used next for each of the spare areas.

3. The multilayer information recording medium of claim 1, further comprising a defect management area in which a defect list is stored,
wherein the defect list includes a contiguous replacement entry, which indicates that a replacement write operation is performed between a series of defective blocks in the user data area and a series of blocks in the spare areas.

4. An apparatus for writing information on a multilayer information recording medium with multiple recording layers,
wherein the multilayer information recording medium comprises:
a user data area on which user data is going to be written; and
first through n^{th} spare areas (where n is an integer that is equal to or greater than four) for providing a replacement block for a defective block, if any, in the user data area,
wherein physical block addresses are assigned to respective blocks that are read/write units for the multilayer information recording medium, and
wherein if a replacement block for the defective block in the user data area needs to be found in the n^{th} spare area, to which a larger physical block address is assigned than any other one of the spare areas, the apparatus uses one of unused blocks of the n^{th} spare area that has the largest physical block address, but
if a replacement block for the defective block in the user data area needs to be found in an i^{th} spare area (where 1 ≦ i <n) , other than the n^{th} spare area, the apparatus uses one of unused blocks of the i^{th} spare area that has the smallest physical block address.

5. A method for writing information on a multilayer information recording medium with multiple recording layers,
wherein the multilayer information recording medium comprises:
a user data area on which user data is going to be written; and
first through n^{th} spare areas (where n is an integer that is equal to or greater than four) for providing a replacement block for a defective block, if any, in the user data area, and
wherein physical block addresses are assigned to respective blocks that are read/write units for the multilayer information recording medium, and
wherein the method comprises the steps of:
(a) choosing one of the spare areas to provide a replacement block for the defective block in the user data area;
if the spare area chosen in the step (a) is the n^{th} spare area, to which the largest physical block address is assigned of all the spare areas,
(b) selecting one of unused blocks of the n^{th} spare area that has the largest physical block address; but
if the spare area chosen in the step (a) is an i^{th} spare area (where 1≦ i<n), other than the n^{th} spare area,
(c) selecting one of unused blocks of the i^{th} spare area that has the smallest physical block address; and
(d) writing data on the replacement block that has been selected in the step (b) or (c).

6. An apparatus for reading information from a multilayer information recording medium with multiple recording layers, the recording medium comprising:
a user data area on which user data is going to be written;
first through n^{th} spare areas (where n is an integer that is equal to or greater than four) for providing a replacement block for a defective block, if any, in the user data area; and
a defect management area to store defect management information,
wherein physical block addresses are assigned to respective blocks that are read/write units for the multilayer information recording medium, and
wherein the n^{th} spare area, to which a larger physical block address is assigned than any other one of the spare areas, is used in the descending order of its physical block addresses, and
wherein the first through (n-1)^{th} spare areas, other than the n^{th} spare area, are used in the ascending order of their physical block addresses, and
wherein the information reading apparatus retrieves the defect management information from the defect management area, and reads information from a replacement block, which is designated by the defect management information, instead of a defective block that is also designated by the defect management information.

7. An apparatus for writing information on a multilayer information recording medium with multiple recording layers,
wherein the multilayer information recording medium comprises:
a user data area on which user data is going to be written;
first through n^{th} spare areas (where n is an integer that is equal to or greater than four) for providing a replacement block for a defective block, if any, in the user data area; and
a defect management area,
wherein physical block addresses are assigned to respective blocks that are read/write units for the multilayer information recording medium, and
wherein in the defect management area, stored is information indicating the physical block address of a block to be used next for each of the spare areas, and
wherein if a replacement block for a defective block in the user data area needs to be found in the n^{th} spare area, to which a larger physical block address is assigned than any other one of the spare areas, the apparatus writes data on the next block to use for the n^{th} spare area and updates the information indicating the physical block address of the next block to use for the n^{th} spare area into a value decreased by the number of the replacement blocks used, but
if a replacement block for a defective block in the user data area needs to be found in an i^{th} spare area (where 1 ≦i < n), other than the n^{th} spare area, the apparatus writes data on the next block to use for the i^{th} spare area and updates the information indicating the physical block address of the next block to use for the i^{th} spare area into a value increased by the number of the replacement blocks used.

8. A method for writing information on a multilayer information recording medium with multiple recording layers,
wherein the multilayer information recording medium comprises:
a user data area on which user data is going to be written;
first through n^{th} spare areas (where n is an integer that is equal to or greater than four) for providing a replacement block for a defective block, if any, in the user data area; and
a defect management area,
wherein physical block addresses are assigned to respective blocks that are read/write units for the multilayer information recording medium, and
wherein in the defect management area, stored is information indicating the physical block address of a block to be used next for each of the spare areas, and
wherein the information writing method comprises the steps of:
(a) retrieving information indicating the physical block address of a block to be used next from the defect management area;
(b) choosing one of the spare areas to provide a replacement block for the defective block in the user data area;
(c) writing data on the next block to use for the spare area that has been chosen in the step (b);
if the spare area chosen in the step (b) is the n^{th} spare area, to which a larger physical block address is assigned than any other one of the spare areas,
(d) updating the information indicating the physical block address of the next block to use for the n^{th} spare area into a value decreased by the number of the replacement blocks used; but
if the spare area chosen in the step (b) is an i^{th} spare area (where 1 ≦i <n), other than the n^{th} spare area,
(e) updating the information indicating the physical block address of the next block to use for the i^{th} spare area into a value increased by the number of the replacement blocks used; and
(f) writing the information indicating the physical block address of the next block to use that has been updated in the step (d) or (e) in the defect management area.

9. A multilayer information recording medium with multiple recording layers on which information is written by the information writing apparatus of claim 7,
wherein the multilayer information recording medium comprises:
a user data area on which user data is going to be written; and
first through n^{th} spare areas (where n is an integer that is equal to or greater than four) for providing a replacement block for a defective block, if any, in the user data area, and
wherein physical block addresses are assigned to respective blocks that are read/write units for the multilayer information recording medium, and
wherein the multilayer information recording medium further includes a defect management area to store information indicating the physical block address of a block to be used next for each of the spare areas.

10. An apparatus for reading information from the multilayer information recording medium of claim 9,
wherein the information reading apparatus retrieves defect management information from the defect management area, and reads information from a replacement block, which is designated by the defect management information, instead of a defective block that is also designated by the defect management information.

11. A multilayer information recording medium with multiple recording layers, the recording medium comprising:
a user data area on which user data is going to be written;
first through n^{th} spare areas (where n is an integer that is equal to or greater than four) for providing a replacement block for a defective block, if any, in the user data area; and
a defect management area, which includes a DDS area and multiple DFL areas,
wherein physical block addresses are assigned to respective blocks that are read/write units for the multilayer information recording medium, and
wherein the DDS area stores pointer information that points to an effective one of the DFL areas, and
wherein the effective DFL area stores information indicating the physical block address of a block to be used next for each of the spare areas.

12. An apparatus for writing information on a multilayer information recording medium with multiple recording layers, the recording medium comprising:
a user data area on which user data is going to be written;
first through n^{th} spare areas (where n is an integer that is equal to or greater than four) for providing a replacement block for a defective block, if any, in the user data area; and
a defect management area, which includes a DDS area and multiple DFL areas,
wherein physical block addresses are assigned to respective blocks that are read/write units for the multilayer information recording medium, and
wherein the apparatus writes pointer information that points to an effective one of the DFL areas on the DDS area, and also writes information indicating the physical block address of a block to be used next for each of the spare areas on the effective DFL area.

13. A method for writing information on a multilayer information recording medium with multiple recording layers, the recording medium comprising:
a user data area on which user data is going to be written;
first through n^{th} spare areas (where n is an integer that is equal to or greater than four) for providing a replacement block for a defective block, if any, in the user data area; and
a defect management area, which includes a DDS area and multiple DFL areas,
wherein physical block addresses are assigned to respective blocks that are read/write units for the multilayer information recording medium, and
wherein the information writing method comprises the steps of:
writing pointer information that points to an effective one of the DFL areas on the DDS area; and
writing information indicating the physical block address of a block to be used next for each of the spare areas on the effective DFL area.

14. An apparatus for reading information from a multilayer information recording medium with multiple recording layers, the recording medium comprising:
a user data area on which user data is going to be written;
first through n^{th} spare areas (where n is an integer that is equal to or greater than four) for providing a replacement block for a defective block, if any, in the user data area; and
a defect management area, which includes a DDS area and multiple DFL areas,
wherein physical block addresses are assigned to respective blocks that are read/write units for the multilayer information recording medium, and
wherein the DDS area stores pointer information that points to an effective one of the DFL areas, and
wherein the effective DFL area stores information indicating the physical block address of a block to be used next for each of the spare areas, and
wherein the information reading apparatus retrieves the pointer information from the DDS area, and also retrieves the information indicating the physical block address of the next block to use from the effective DFL area pointed to by the pointer information.

15. An apparatus for writing information on a multilayer information recording medium with multiple recording layers, the recording medium comprising:
a user data area on which user data is going to be written; and
first through n^{th} spare areas (where n is an integer that is equal to or greater than four) for providing a replacement block for a defective block, if any, in the user data area; and
wherein physical block addresses are assigned to respective blocks that are read/write units for the multilayer information recording medium, and
wherein if replacement blocks for a series of defective blocks in the user data area need to be found in the n^{th} spare area, to which a larger physical block address is assigned than any other one of the spare areas, the apparatus writes data collectively on contiguous ones of unused blocks of the n^{th} spare area that have the largest physical block address, but
if replacement blocks for the series of defective blocks in the user data area need to be found in an i^{th} spare area (where 1 ≦i < n), other than the n^{th} spare area, the apparatus writes data collectively on contiguous ones of unused blocks of the i^{th} spare area that have the smallest physical block address.

16. The information writing apparatus of claim 15, wherein the multilayer information recording medium further includes a defect management area,
wherein in the defect management areas, stored is information indicating the physical block address of a block to be used next for each of the spare areas, and
wherein if replacement blocks for the series of defective blocks in the user data area need to be found in the n^{th} spare area,
the information writing apparatus selects blocks that start with the next block to use for the n^{th} spare area and are contiguous with each other in the descending order of the addresses,
writes data collectively, in the ascending order of the addresses, on those replacement blocks that are contiguous with each other in the descending order, and
updates the information indicating the physical block address of the next block to use for the n^{th} spare area into a value decreased by the number of the replacement blocks used, but
if replacement blocks for the series of defective blocks in the user data area need to be found in the i^{th} spare area,
the information writing apparatus writes data collectively, in the ascending order of the addresses, on a series of replacement blocks that starts with the next block to use for the i^{th} spare area, and
updates the information indicating the physical block address of the next block to use for the i^{th} spare area into a value increased by the number of the replacement blocks used.

17. A method for writing information on a multilayer information recording medium with multiple recording layers,
wherein the multilayer information recording medium comprises:
a user data area on which user data is going to be written; and
first through n^{th} spare areas (where n is an integer that is equal to or greater than four) for providing a replacement block for a defective block, if any, in the user data area, and
wherein physical block addresses are assigned to respective blocks that are read/write units for the multilayer information recording medium, and
wherein the information writing method comprises the steps of:
(a) choosing one of the spare areas to provide replacement blocks for a series of defective blocks in the user data area;
if the spare area chosen in the step (a) is the n^{th} spare area, to which a larger physical block address is assigned than any other one of the spare areas,
(b) selecting contiguous ones of unused blocks of the n^{th} spare area that have the largest physical block address; but
if the spare area chosen in the step (a) is an i^{th} spare area (where 1 ≦i <n), other than the n^{th} spare area,
(c) selecting contiguous ones of unused blocks of the i^{th} spare area that have the smallest physical block address; and
(d) writing data collectively on those contiguous replacement blocks that have been selected in the step (b) or (c).

18. The information writing method of claim 17, wherein the multilayer information recording medium further includes a defect management area, and
wherein in the defect management area, stored is information indicating the physical block address of a block to be used next for each of the spare areas, and
wherein the information writing method further includes the step (e) of retrieving information indicating the physical block address of the next block to use from the defect management area, and
wherein if the spare area chosen in the step (a) is the n^{th} spare area,
the step (b) includes selecting blocks that start with the next block to use for the n^{th} spare area and that are contiguous with each other in the descending order of the addresses, and
the step (d) includes writing data collectively, in the ascending order of the addresses, on those blocks that are contiguous with each other in the descending order, but
if the spare area chosen in the step (a) is the i^{th} spare area,
the step (d) includes writing data collectively, in the ascending order of the addresses, on those blocks that start with the next block to use for the i^{th} spare area, and
wherein the information writing method further comprises the steps of:
if data has been written on the replacement blocks in the n^{th} spare area,
(f) updating the information indicating the physical block address of the next block to use for the n^{th} spare area into a value decreased by the number of the replacement blocks used; but
if data has been written on the replacement blocks in the i^{th} spare area,
(g) updating the information indicating the physical block address of the next block to use for the i^{th} spare area into a value increased by the number of the replacement blocks used; and
(h) writing the information indicating the physical block address of the next block to use, which has been updated in the step (f) or (g), on the defect management area.
